# EUROPEAN PATENT SPECIFICATION

(11) **EP 3 617 748 B1**
(45) Date of publication and mention of the grant of the patent: **10.09.2025**
(21) Application number: 17913152.9
(22) Date of filing: 27.07.2017
(51) Int. Cl.: G01S 19/07, G01S 19/41, H04W 88/08, H04W 88/02

(54) **POSITIONING METHOD, DEVICE AND SYSTEM**
POSITIONIERUNGSVERFAHREN, -VORRICHTUNG UND -SYSTEM
PROCÉDÉ, DISPOSITIF ET SYSTÈME DE POSITIONNEMENT

(30) Priority: 16.06.2017 CN 201710458151
(43) Date of publication of application: 04.03.2020
(73) Proprietor: Huawei Technologies Co., Ltd., Longgang District Shenzhen, Guangdong 518129 (CN)
(72) Inventor: GONG, Shuqiang, Shenzhen Guangdong 518129 (CN)
(74) Representative: Grünecker Patent- und Rechtsanwälte PartG mbB
(86) International application number: PCT/CN2017/094781
(87) International publication number: WO 2018/227727

(56) References cited:
- EP-A1- 1 215 508
- EP-A1- 1 215 508
- EP-A2- 0 574 009
- CN-A- 105 722 023
- CN-A- 105 824 037
- CN-A- 106 324 645
- CN-A- 106 556 853
- CN-A- 106 556 853
- US-A- 5 990 825
- US-A1- 2008 250 142
- US-A1- 2013 293 412

## Description

### TECHNICAL FIELD

Embodiments of this application relate to the field of wireless communications technologies, and in particular, to a positioning method and a terminal.

### BACKGROUND

A key technology of services such as high-precision navigation and speed detection is high-precision positioning. Currently, a differential global navigation satellite system (global navigation satellite system, GNSS) positioning technology is mainly used in high-precision positioning.

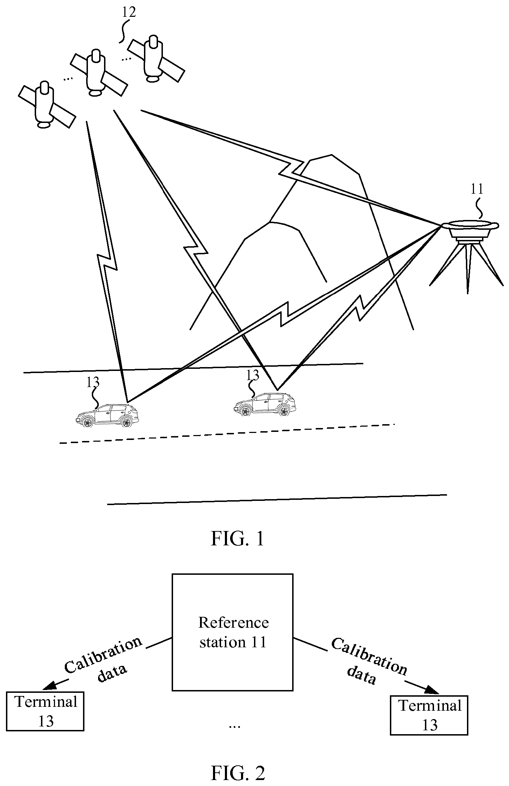

Referring to FIG. 1, a main principle of the differential GNSS positioning technology is: A reference station 11 located ata known location may receive a satellite signal sent by a satellite system 12, calculate an error value based on a location measurement value obtained from the satellite signal and an actual location, and send the error value to a terminal 13; and the terminal 13 may eliminate, based on the error value, a major error of the location measurement value obtained based on the satellite signal, thereby implementing accurate positioning. The differential GNSS positioning technology may mainly include a real-time dynamic code phase differential (real time differential, RTD) technology and a carrier phase differential (real time kinematic, RTK) technology.

When a distance between the terminal and the reference station exceeds a distance range to which the differential GNSS technology is applicable, positioning accuracy of the differential GNSS technology is reduced due to reasons such as an environmental factor difference and precision restriction of theory of an algorithm, consequently, accuracy cannot be improved. For example, if the distance between the terminal and the reference station is too far, a stratospheric error, an ionospheric error, and the like between the terminal and a place at which the reference station is located are also relatively large, consequently, a GNS S error value received by the terminal from the reference station is no longer applicable, and the positioning accuracy cannot be improved. In the prior art, a reference station is usually disposed at a particular location, and a quantity of the reference stations is relatively small. Therefore, a distance range between a terminal and the reference station is large, for example, ranges from hundreds of meters to hundreds of kilometers. As a result, positioning accuracy of the terminal varies with the distance between the terminal and the reference station, and an actual utilization effect is affected.
Chinese patent application CN 105 722 023 A discloses a base station with integrated GPS receiver for calculating and transferring a GPS satellite pseudorange correction amount to a mobile terminal via a broadcasting multicast service of a multimedia broadcasting and multicast (eMBMS) service network.
US patent application US 2013/0293412 A1 teaches providing Global Navigation Satellite Systems (GNSS) correction information to mobile devices over the control plane of a cellular network wherein the cellular base stations obtain GNSS correction information through integrated GNSS correction generation devices and wherein the position calculation module of a mobile device may use several received GNSS correction information to calculate its geospatial position.

### SUMMARY

Embodiments of this application provide a positioning method and a terminal so that a distance between a terminal and an access network device that sends calibration data is relatively short, thereby improving positioning accuracy of the terminal.

To achieve the foregoing objective, the following technical solutions are used in the embodiments of this application:

According to a first embodiment, this application provides a positioning method according to claim 1. Preferred embodiments are subject of the dependent claims.

In this way, the terminal may receive calibration data sent by a nearby access network device that is integrated with a function of a reference station, so that a distance between the terminal and the access network device that sends the calibration data can be relatively short. In addition, the calibration data does not need to be transmitted by using a core network, so that transmission realtimeness of the calibration data can be better, thereby improving accuracy of positioning performed by the terminal based on the calibration data, and reducing a positioning error.

With reference to the first embodiment, in a possible implementation, the calibration data includes first location data and second location data of the access network device, the first location data is used to indicate an accurate location of the access network device, and the second location data is location data obtained by the access network device based on a first satellite signal. Alternatively, the calibration data includes differential data of the first location data and the second location data, and the differential data includes at least one of a longitude and latitude differential value, a distance differential value, a code phase differential value, and a carrier phase differential value.

In this way, specific content of the calibration data may be more flexible.

According to the invention, that a terminal receives at least one group of calibration data sent by at least one access network device includes: receiving, by the terminal in a point-to-point transmission mode, the at least one group of calibration data sent by the at least one access network device.

The calibration data received in the point-to-point transmission mode is more reliable and secure.

According to the invention, the at least one group of calibration data includes a plurality of groups of calibration data, and that the terminal determines an accurate location of the terminal based on the at least one group of calibration data and the third location data includes: determining, by the terminal, a group of target calibration data based on the plurality of groups of calibration data, and determining, by the terminal, the accurate location of the terminal based on the target calibration data and the third location data.

When receiving the plurality of groups of calibration data, the terminal may determine a group of target calibration data, and determine the accurate location of the terminal based on the group of determined target calibration data.

According to the invention, the target calibration data is a group of calibration data sent by an access network device having a highest priority.

In this way, the terminal may perform positioning by selecting calibration data sent by an access network device having a high priority.

With reference to the first embodiment and the foregoing possible implementations, in another possible implementation, the target calibration data includes first location data and second location data, and that the terminal determines the accurate location of the terminal based on the target calibration data and the third location data includes: determining, by the terminal, differential data of the first location data and the second location data in the target calibration data; and determining, by the terminal, the accurate location of the terminal based on the differential data and the third location data.

In this way, a terminal side has a capability of calculating the differential data of the first location data and the second location data, so that precise positioning may be performed based on the calculated differential data.

According to a second embodiment, this application provides a terminal according to claim 4.

With reference to the second embodiment, in a possible implementation, the calibration data includes first location data and second location data of the access network device, the first location data is used to indicate an accurate location of the access network device, and the second location data is location data obtained by the access network device based on a first satellite signal. Alternatively, the calibration data includes differential data of the first location data and the second location data, and the differential data includes at least one of a longitude and latitude differential value, a distance differential value, a code phase differential value, and a carrier phase differential value.

According to the invention, the first receiving unit is specifically configured to receive, in a point-to-point transmission mode, the at least one group of calibration data sent by the at least one access network device.

According to the invention, the at least one group of calibration data includes a plurality of groups of calibration data, and the determining unit is specifically configured to: determine a group of target calibration data based on the plurality of groups of calibration data; and determine an accurate location of the terminal based on the target calibration data and the third location data.

In another possible implementation, the target calibration data is a group of calibration data sent by an access network device closest to the terminal.

According to the invention, the target calibration data is a group of calibration data sent by an access network device having a highest priority.

With reference to the second embodiment and the foregoing possible implementations, in another possible implementation, the target calibration data includes first location data and second location data, and the determining unit is specifically configured to: determine differential data of the first location data and the second location data in the target calibration data; and determine the accurate location of the terminal based on the differential data and the third location data.

### BRIEF DESCRIPTION OF DRAWINGS

FIG. 1 is a schematic diagram of a principle of a positioning method according to the prior art;
FIG. 2 is a schematic diagram showing that a reference station sends a calibration value according to an embodiment of this application;
FIG. 3 is a schematic structural diagram of a reference station according to an illustrative example of this application;
FIG. 4 is a schematic structural diagram of an access network device according to an illustrative example of this application;
FIG. 5 is a schematic structural diagram of a mobile phone according to an embodiment of this application;
FIG. 6 is a schematic structural diagram of a vehicle-mounted device according to an embodiment of this application;
FIG. 7 is a schematic diagram of a principle of a positioning method according to an embodiment of this application;
FIG. 8 is a flowchart of a positioning method according to an embodiment of this application;
FIG. 9 is a schematic diagram of data transmission according to an embodiment of this application;
FIG. 10 is a schematic diagram of a transmission mode of calibration data according to an illustrative example of this application;
FIG. 11 is a schematic diagram of another transmission mode of calibration data according to an illustrative example of this application;
FIG. 12 is a schematic diagram of another transmission mode of calibration data according to an embodiment of this application;
FIG. 13 is a schematic diagram of another transmission mode of calibration data according to an embodiment of this application;
FIG. 14 is a schematic distribution diagram of an access network device according to an illustrative example of this application;
FIG. 15 is a flowchart of another positioning method according to an illustrative example of this application;
FIG. 16 is a flowchart of another positioning method according to an embodiment of this application;
FIG. 17 is a schematic structural diagram of another access network device according to an illustrative example of this application;
FIG. 18 is a schematic structural diagram of a terminal according to an embodiment of this application;
FIG. 19 is a schematic structural diagram of an access network device or a terminal according to an embodiment of this application;
FIG. 20 is a schematic structural diagram of another access network device or a terminal according to an embodiment of this application; and
FIG. 21 is a schematic structural diagram of a system according to an illustrative example of this application.

### DESCRIPTION OF EMBODIMENTS

For ease of understanding, descriptions of some concepts related to the embodiments of this application are given as examples for reference, as shown below:
Broadcast: an information transmission mode, which refers to a technology in which a device in a network sends data to all other devices in the network at the same time.

Broadcast domain: a range in which broadcast data can be broadcast, in other words, a set of all devices that can receive same broadcast data in a network.

Point-to-point: point-to-point communication, which implements information exchange between any two users in a network. After data with point-to-point communication identification information is received, a system number and an address code are respectively compared with a local system number and a local address code, and when both the system number and the address code are respectively consistent with the local system number and the local address code, data is transmitted to a user terminal; otherwise, the data is discarded and not transmitted to the user terminal. During point-to-point communication, only one user can receive information. However, for the foregoing broadcast communication, a plurality of users can receive the information.

Pseudorange: Due to a satellite clock error, a receiver clock error, and a delay caused when a radio signal passes through an ionosphere and a troposphere, an actually measured distance A is different from a geometrical distance B between a satellite and a receiver. Therefore, the measured distance is usually referred to as the pseudorange.

GNSS: Global navigation satellite system positioning is observing and measuring by using pseudoranges, ephemerides, and satellite transmission times of a group of satellites, in addition, a user clock error needs to be learned of. A global navigation satellite system is an air-based radio navigation and positioning system that provides a user with three-dimensional coordinates and speeds, and time information at any place on Earth's surface or near earth space.

The following describes the technical solutions in the embodiments of this application with reference to the accompanying drawings in the embodiments of this application. In description of the embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the description of the embodiments of this application, "a plurality of" means two or more than two.

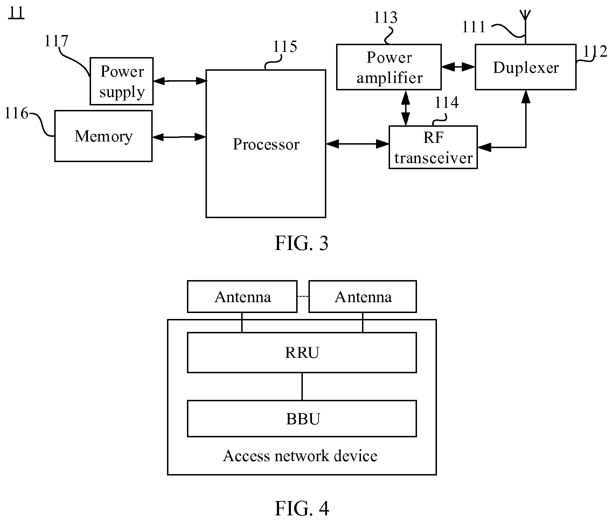

In a differential GNSS positioning technology, referring to FIG. 2, a satellite reference station 11 is mainly configured to send calibration data such as an error value obtained based on a satellite signal and an accurate location to a terminal 13 by using a wired network or a wireless network, or in a radio broadcast manner. The terminal 13 may also receive the calibration data by using the wired network or the wireless network, or in the radio broadcast manner, and determine an accurate location of the terminal 13 with reference to the calibration data by using the satellite signal obtained by using a GNSS module of the terminal 13. Referring to FIG. 3, in a composition manner of the reference station 11, the reference station 11 may include an antenna 111, a duplexer 112, a power amplifier 113, a radio frequency (radio frequency, RF) transceiver 114, a processor 115, a memory 116, a power supply 117, and the like. The antenna 111 may be configured to receive a satellite signal from a satellite system, and may further be configured to send the calibration data to the terminal. In FIG. 3, although not shown, it may be understood that the antenna 111 may specifically include two groups of antennas. One group of antennas may be configured to receive satellite signals, and the other group of antennas may be configured to send the calibration data.

In an existing differential GNSS positioning solution shown in FIG. 1, because a reference station is usually disposed at a particular location and a quantity of reference stations is relatively small, a distance between a terminal and the reference station is usually relatively long. Therefore, the differential GNSS technology cannot be made full use of, and positioning accuracy of the terminal cannot achieve ideal performance. In the differential GNSS positioning solution provided in this embodiment of this application, a function of the reference station is integrated into access network devices that are widely distributed in a mobile communications network, calibration data is measured and calculated by the access network device, and the calibration data is sent to a terminal within network signal coverage of the access network device. Therefore, it can be ensured that a distance between the terminal and the access network device that is integrated with the function of the reference station is relatively short, and accuracy of the calibration data in the differential GNSS technology meets an algorithm requirement, differential GNSS positioning accuracy of the terminal reaches an ideal level, and positioning accuracy is improved.

The access network device may be a relay station, an access point, or the like. The access network device may be a base transceiver station (base transceiver station, BTS) in a global system for mobile communications (global system for mobile communication, GSM) or a code division multiple access (code division multiple access, CDMA) network, or may be an NB (NodeB) in wideband code division multiple access (wideband code division multiple access, WCDMA), or may be an eNB or an eNodeB (evolutional NodeB) in LTE. Alternatively, the access network device may be a radio controller in a cloud radio access network (cloud radio access network, CRAN) scenario. Alternatively, the access network device may be a network device in a 5G network or a network device in a future evolved public land mobile network (public land mobile network, PLMN). The network device in the future 5G network may include a new radio NodeB (new radio NodeB), a next generation NodeB (next generation NodeB, gNB), a transmission point (transmission point), or the like. Alternatively, the access network device may be a fixed station or the like in Internet of Things, Internet of Vehicles, or a vehicle-to-vehicle V2V technology.

The terminal in this embodiment of this application may be a terminal device used for positioning, user equipment (user equipment, UE), an access terminal, a UE unit, a UE station, a mobile station, a mobile console, a remote station, a remote terminal, a mobile device, a UE terminal, a terminal, a wireless communications device, a UE agent, a UE apparatus, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, or the like. For example, the access terminal may be specifically a mobile phone, a tablet computer, a notebook computer, an ultra-mobile personal computer (ultra-mobile personal computer, UMPC), a netbook, or the like.

In an example, the access network device may be implemented by using a structure shown in FIG. 4. As shown in FIG. 4, the access network device may include a building baseband unit (building baseband unit, BBU) and a remote radio module (remote radio unit, RRU) that is connected to an antenna feeder system (in other words, an antenna). The BBU and the RRU may be separately used as required. It should be noted that, in a specific implementation process, the access network device may further use another general hardware architecture, and is not limited to the general hardware architecture shown in FIG. 4. In addition, the access network device may further include a GNSS module, configured to receive a satellite signal, so that the access network device performs clock synchronization between access network devices based on the satellite signal, and signal synchronization can be maintained when the terminal is handed over between the access network devices.

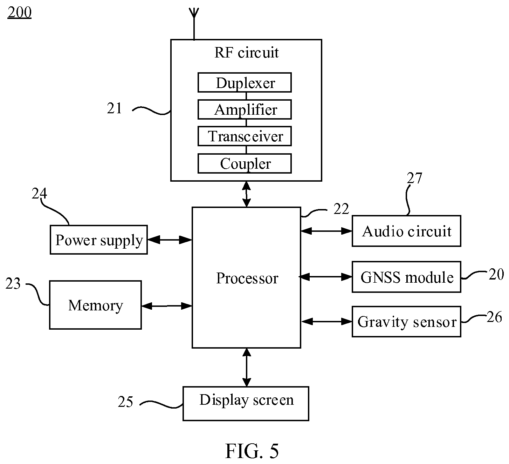

An example in which the terminal is a mobile phone is used to describe a general hardware architecture of the mobile phone. As shown in FIG. 5, the mobile phone 200 may include components such as a GNSS module 20, a radio frequency (radio frequency, RF) circuit 21, a processor 22, a memory 23, a power supply 24, a display screen 25, a gravity sensor 26, an audio circuit 27, a speaker 28, and a microphone 29. These components may be connected by using a bus, or may be directly connected. A person skilled in the art may understand that a structure of the mobile phone shown in FIG. 5 constitutes no limitation on the mobile phone, and the mobile phone may include components more or fewer than those shown in this figure, or a combination of some components, or components disposed differently.

The GNSS module 20 is configured to: receive a satellite signal, and calculate parameters such as a pseudorange, longitude, latitude, a height, and a time correction based on the satellite signal, so that the mobile phone 200 performs positioning, navigation, speed detection, time synchronization, and the like based on these parameters.

The RF circuit 21 may be configured to: receive or send information, or receive and send a signal in a call process, and in particular, send received information to the processor 22 for processing, and send a signal generated by the processor 22. Usually, the RF circuit 21 may include, but is not limited to, an antenna, at least one amplifier, a transceiver, a coupler, a low noise amplifier (low noise amplifier, LNA), a duplexer, or the like. In addition, the RF circuit 21 may further communicate with a network and another device through wireless communication.

The processor 22 is a control center of the mobile phone 200, connects all parts of the entire mobile phone by using various interfaces and lines, and performs various functions of the mobile phone 200 and data processing by running or executing a software program and/or a module that are/is stored in the memory 23 and by invoking data stored in the memory 23, to perform overall monitoring on the mobile phone 200. During specific implementation, in an embodiment, the processor 22 may include one or more processing units, and an application processor and a modem processor may be integrated into the processor 22. The application processor mainly processes an operating system, a user interface, an application program, and the like, and the modem processor mainly processes wireless communication. It can be understood that the foregoing modem processor may alternatively not be integrated into the processor 22.

The memory 23 may be configured to store data and a software program and module, and may be a volatile memory (volatile memory), for example, a random access memory (random-access memory, RAM), or may be a non-volatile memory (non-volatile memory), for example, a read-only memory (read-only memory, ROM), a flash memory (flash memory), a hard disk drive (hard disk drive, HDD), or a solid-state drive (solid-state drive, SSD), or may be a combination of the foregoing types of memories. Specifically, the memory 23 may store program code, and the program code is used to enable the processor 22 to perform, by executing the program code, a positioning method provided in the embodiments of this application.

The power supply 24 may be a battery, and is logically connected to the processor 22 by using a power management system, to implement functions such as charging management, discharging management, and power consumption management by using the power management system. The display screen 25 may be referred to as a display panel, and is configured to display a user interface. The display screen 25 may further be a touch panel, configured to implement input and output functions of the mobile phone 200. The gravity sensor (gravity sensor) 26 may detect a value of acceleration in each direction (generally, three axes) of the mobile phone, may detect a value and a direction of gravity in a static mode, and may be used for an application that identifies a mobile phone gesture (such as screen switching between portrait and landscape modes, a related game, and magnetometer gesture calibration), a function related to vibration identification (such as a pedometer and a strike), and the like. It should be noted that the mobile phone 200 may further include other sensors such as a pressure sensor, an optical sensor, a gyroscope, a barometer, a hygrometer, a thermometer, and an infrared sensor. Details are not described herein.

Although not shown, the mobile phone 200 may further include function modules such as a wireless fidelity (wireless fidelity, Wi-Fi) module, a Bluetooth module, and a camera. Details are not described herein.

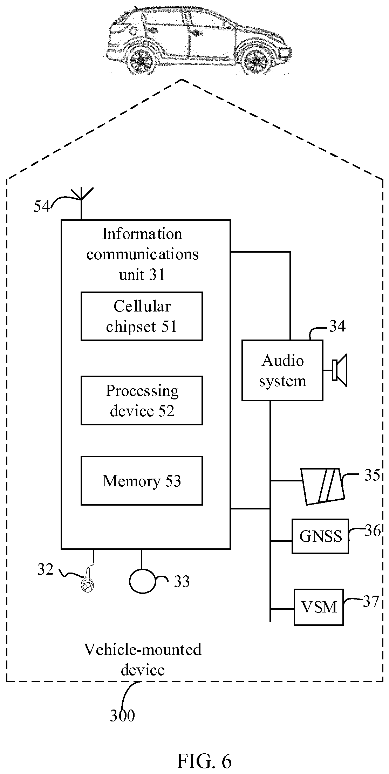

An example in which the terminal is a vehicle-mounted device is used to describe a general hardware architecture of the vehicle-mounted device. As shown in FIG. 6, the vehicle-mounted device 300 may include an information communications unit 31, a microphone 32, one or more buttons, or another control input 33, an audio system 34, a visual display 35, a GNSS module 36, and a plurality of vehicle-mounted device security units (vehicle security module, VSM) 37, and the like.

The information communications unit 31 uses cellular communication based on a global system for mobile communications (global system for mobile communication, GSM) or a code division multiple access (code division multiple access, CDMA) standard, and therefore, includes a standard cellular chipset 51 for voice communication (for example, a hands-free call), a wireless modem for data transmission, an electronic processing device 52, one or more digital memories 53, and a biantenna 54. It should be understood that the modem can be implemented by software stored in the information communications unit and executed by the processor 52, or may be a separate hardware component located inside or outside the information communications unit 31. Wireless networking between the vehicle-mounted device and another networking device can also be performed by using the information communications unit 31.

The processor 52 may be any type of device capable of processing an electronic instruction, including a microprocessor, a microcontroller, a main processor, a controller, a communications processor of the vehicle-mounted device, and a dedicated integrated circuit. The processor 52 may be a dedicated processor that is used only in the information communications unit 31 or that can be shared with another vehicle-mounted system. The processor 52 executes various types of digital storage instructions, for example, software or firmware programs stored in the memory 53, so that the processor 52 may enable the information communications unit to provide various wide services. For example, the processor 52 may execute a program or process data, to perform at least a part of the method discussed in this specification.

The GNSS module 36 may be configured to receive a radio satellite signal from a satellite system. The GNSS module 36 may determine a location of the vehicle-mounted device based on the received satellite signal. The location of the vehicle-mounted device is used to provide navigation and another location-related service for a driver of the vehicle-mounted device. Navigation information may be presented on the display 35 (or another display in the vehicle-mounted device) or may be presented in a language, for example, when steering navigation is provided. A navigation service can be provided by using a dedicated navigation module (which may be a part of the GPS module 36) in the vehicle-mounted device, or some or all navigation services may be completed by using the information communications unit 31. Location information is sent to a remote location, to provide the vehicle-mounted device with a navigation map, a map annotation, route calculation, and the like. The location information can be provided for a call center or another remote computer system such as a computer for another objective, such as fleet management. In addition, new or updated map data can be downloaded to the GNSS module 36 by using the information communications unit 31.

The following describes a differential GNSS positioning method provided in this embodiment of this application by mainly using an example in which the terminal is a mobile phone or a vehicle-mounted device. The differential GNSS positioning technology provided in this embodiment of this application may include an RTD mode and an RTK mode.

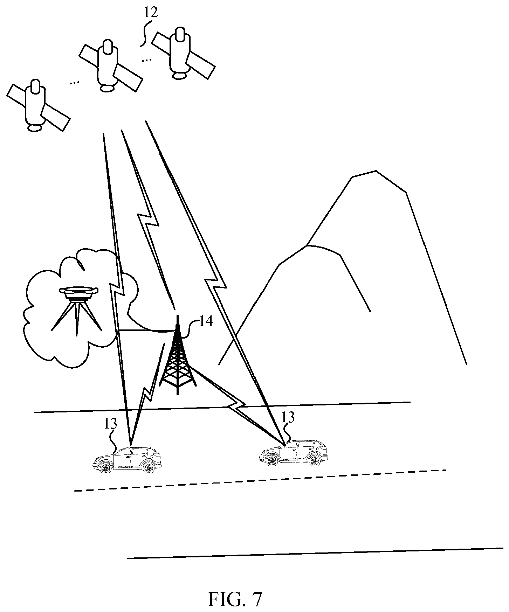

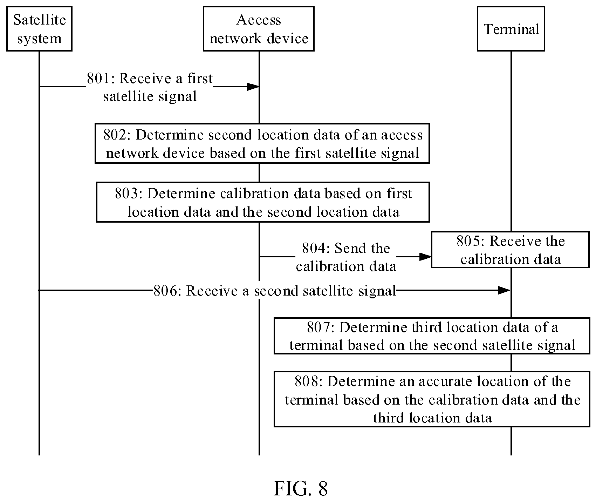

The differential GNSS positioning method provided in this embodiment of this application relates to an access network device and a terminal. The access network device stores first location data of the access network device, and the first location data is used to indicate an accurate location of the access network device. Referring to FIG. 7 and FIG. 8, the positioning method may include the following steps.

801: The access network device receives a first satellite signal from a satellite system.

The satellite signal herein refers to a modulation wave that is sent by the satellite system and that is used for navigation positioning, and may specifically include information such as a carrier, ranging code, and data code. The carrier and the ranging code are used to measure a distance between a satellite and a ground receiver (a device that receives the satellite signal). The data code provides parameters required for calculating coordinates of the satellite. Coordinates of a ground point are obtained based on the coordinates of the satellite and a distance between the satellite and the ground.

As a ground receiver, the access network device may receive the first satellite signal sent by the satellite system. A mark number 14 in FIG. 7 represents the access network device.

802: The access network device determines second location data of the access network device based on the satellite signal.

After receiving the first satellite signal, the access network device may measure and calculate a one-way time delay or phase delay during propagation based on the first satellite signal, and further determine a distance between the access network device and a satellite that sends the first satellite signal. The access network device may determine information such as distances between the access network device and different satellites by receiving the first satellite signals sent by a plurality of satellites in the satellite system, to determine the second location data of the access network device based on the information such as the distance. For example, the access network device may obtain the second location data by receiving the first satellite signals sent by four satellites, and one of the four satellites may be used to enable the satellite to be synchronized with an atomic clock of the access network device.

The second location data herein is used to describe a location of the access network device, and may be specifically at least one of longitude and latitude, a pseudorange, a code phase, and a carrier phase. The location of the access network device may be learned of based on the second location data. These are not described one by one herein.

803: The access network device determines calibration data based on the first location data and the second location data.

The first location data used to describe the accurate location of the access network device may also be at least one of longitude and latitude, a pseudorange, a code phase, or a carrier phase. The first location data is used to describe the accurate location of the access network device, may be obtained through manual measurement, may be manually updated and calibrated, or may be updated and calibrated by a related person by using a network.

The access network device may determine the calibration data based on the first location data and the second location data. Particularly, the first location data and the second location data may include data parameters of a same type. For example, both the first location data and the second location data include longitude and latitude. In this way, the access network device may more conveniently determine the calibration data based on the data parameters of the same type, and the determined calibration data, the first location data, and the second location data include data parameters of the same type. Alternatively, when a type of the data parameter included in the first location data is different from a type of the data parameter included in the second location data, the access network device may first convert the data parameters of different types into data parameters of a same type, to determine the calibration data based on the data parameters of the same type.

When the type of the data parameter included in the second location data is different from the type of the data parameter included in the first location data, the access network device may first convert the second location data and the first location data into data parameters of a same type, and then determine the calibration data.

804: The access network device sends the calibration data to the terminal.

The terminal herein is a terminal within network signal coverage of the access network device. The network signal coverage of the access network devices ranges from hundreds of meters to thousands of meters. It can be known from steps 801 to 804 that, in this embodiment of this application, the access network device may determine the calibration data, and send the calibration data to the terminal. The calibration data is used to enable the terminal to determine an accurate location of the terminal based on the calibration data. It may be understood that the access network device integrates a function of a reference station in the prior art. In networking coverage of a mobile communications network, the access network devices are widely distributed and a quantity of the access network devices is relatively large, so that a distance between the terminal and the access network device is relatively short, in other words, a distance between the terminal and the reference station is relatively short. When the terminal determines the accurate location of the terminal based on the calibration data, positioning accuracy of the terminal may be improved.

805: The terminal receives at least one group of calibration data sent by at least one access network device.

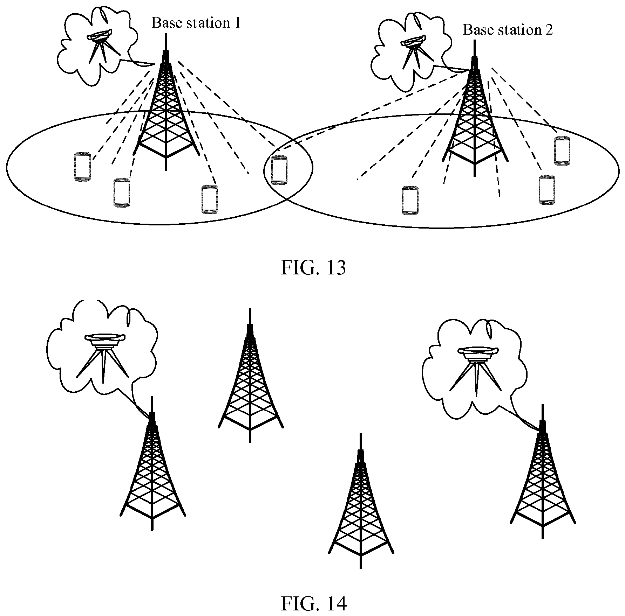

Because network signal coverage of different access network devices may overlap, the terminal may fall within network signal coverage of a plurality of access network devices. Therefore, referring to FIG. 13, the terminal may receive calibration data separately sent by one or more access network devices, and the calibration data is calibration data obtained by each of the different access network devices by using steps 801 to 803.

806: The terminal receives a second satellite signal from the satellite system.

Similar to step 801 in which the access network device receives the first satellite signal, the terminal may also receive the second satellite signal from the satellite system. However, different from the first satellite signal used to obtain the location data of the access network device in step 801, the second satellite signal in step 806 is used to obtain location data of the terminal.

807: The terminal determines third location data of the terminal based on the second satellite signal.

The third location data is used to describe a location of the terminal, and may be specifically at least one of longitude and latitude, a pseudorange, a code phase, or a carrier phase. After receiving the second satellite signal, the terminal may determine the third location data based on the second satellite signal.

Step 805 may be specifically performed before step 806 and step 807, or may be performed after step 806 and step 807. A sequence of step 805 is not specifically limited in this embodiment of this application.

808: The terminal determines the accurate location of the terminal based on the at least one group of calibration data and the third location data.

After obtaining the calibration data sent by the access network device and the third location data, the terminal may determine the accurate location of the terminal based on the calibration data and the third location data.

Particularly, the calibration data and the third location data may include data parameters of a same type. For example, both the calibration data and the third location data include longitude and latitude. In this way, the terminal may more conveniently determine the accurate location of the terminal based on the data parameters of the same type. Alternatively, when a type of the data parameter included in the calibration data is different from a type of the data parameter included in the third location data, the terminal may first convert the data parameters of different types into data parameters of a same type, so as to determine the accurate location of the terminal based on the data parameters of the same type.

When the type of the data parameter included in the calibration data is different from the type of the data parameter included in the third location data, the access network device may first convert the third location data and the calibration data into data parameters of a same type, and then determine the accurate location of the terminal based on the calibration data and the third location data.

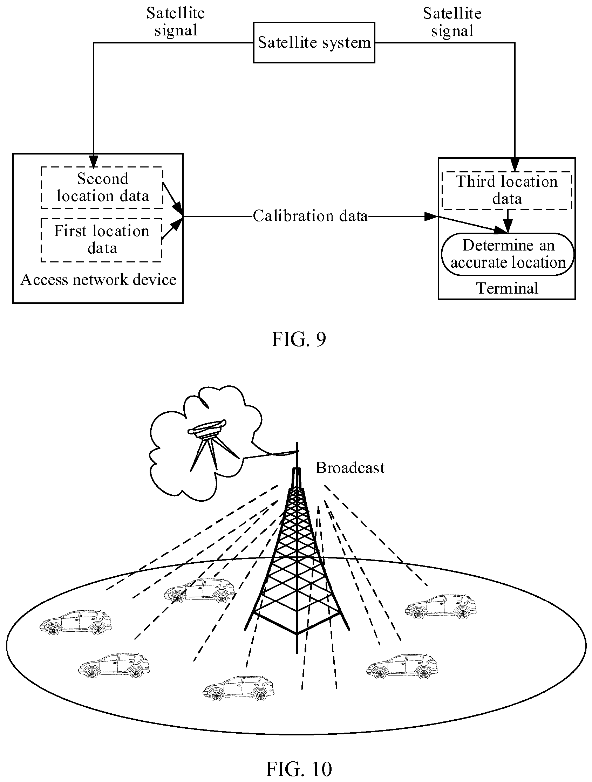

In this embodiment of this application, for a schematic diagram of data transmission corresponding to steps 801 to 808, refer to FIG. 9.

For the access network device, a GNSS module not only implements clock synchronization between the access network devices by receiving the satellite signal, but also determines the calibration data based on the satellite signal, so that the access network device may send the calibration data to the terminal for precise positioning.

For the terminal, the GNSS module may specifically include a processor. The processor in the GNSS module may receive the calibration data, and determine the accurate location of the terminal with reference to the third location data. Alternatively, the processor in the GNSS module may also import the third location data into a main processor of the terminal, and the main processor determines the accurate location of the terminal with reference to the third location data and the received calibration data. In addition, when the RTK mode is used, the GNSS module may be specifically configured to measure a signal phase, and can provide a calculation capability to calculate the accurate location of the terminal.

In the positioning method provided in this embodiment of this application, the function of the reference station is integrated into the access network device by using features that the access network devices are widely distributed in the mobile communications network and the quantity of the access network devices is relatively large, the calibration data is determined by the access network device, and the calibration data is sent to the terminal within the network signal coverage of the access network device. The terminal receives calibration data sent by a nearby access network device, to determine the accurate location of the terminal based on the calibration data. In this way, a distance between the terminal and the access network device that sends the calibration data may be relatively short, so that accuracy of positioning performed by the terminal based on the calibration data can be improved, and a positioning error can be reduced.

Because the network signal coverage of the access network device usually ranges from hundreds of meters to thousands of meters, a maximum distance between the terminal and the access network device that sends the calibration data also falls within the range of "thousands of meters". Therefore, a prior-art case in which the distance between the terminal and the reference station is dozens of kilometers or even hundreds of kilometers does not exist.

In addition, because the access network devices are widely distributed and the quantity of access network devices is relatively large, the coverage of the access network device is wide, and a terminal at any location may fall within network signal coverage of one or more access network devices. Therefore, the terminal can receive the calibration data sent by the nearby access network device in a short distance, to perform precise positioning.

In addition, the distance between the terminal and the reference station affects an actual utilization effect of the differential GNSS positioning solution, and realtimeness of communication between the terminal and the reference station also affects actual positioning accuracy. Particularly, when the RTK mode is used, a requirement of transmission realtimeness of the calibration data is higher, and an amount of the calibration data is large. In the prior art, because the distance between the terminal and the reference station is usually relatively long, the terminal usually accesses an access network of the mobile communications network by using the access network device, and communicates with the reference station by using the access network and a core network. The calibration data sent by the reference station can be sent to the terminal only by using the core network and the access network, in other words, the reference station sends the calibration data to the terminal by using a wide area network. Therefore, a transmission link is long, a transmission delay is high, and realtimeness is poor. Particularly, when an amount of the calibration data is large (for example, when the RTK mode is used), relatively large bandwidth is occupied, and traffic load of the core network is relatively heavy. When traffic of the core network is busy or network performance is poor, transmission realtimeness of the calibration data is also affected.

However, in this embodiment of this application, the function of the reference station is integrated into the access network device, so that the calibration data is directly measured and calculated by the access network device, and the calibration data is directly sent to the terminal within the coverage of the access network device, rather than being transmitted by using the core network as in the prior art. The access network device may directly send the calibration data to the terminal by using an internal network, so that the transmission delay is short, the transmission realtimeness of the calibration data is good and is not limited by the traffic load of the core network. That is, in this embodiment of this application, the access network device may send the determined calibration data to the terminal within the coverage in real time, so that the terminal can perform precise positioning based on the calibration data obtained in real time.

In addition, in the prior art, a positioning method is further provided. Amain principle of the positioning method is that a mobile communications network sends an ephemeris of a location of a terminal or an approximate location of a terminal to the terminal, to accelerate a satellite searching speed and a positioning speed of the terminal. Different from the positioning method used in the prior art to accelerate the positioning speed of the terminal, in the positioning method provided in this embodiment of this application, the calibration data is determined by the access network device, and the calibration data is sent to a terminal in a short distance, to improve positioning accuracy of the terminal.

In the prior art, another positioning method is further provided. The method is mainly based on the 802.11p protocol, and high-precision positioning is implemented by using a Wi-Fi technology and in combination with a wireless positioning principle. In the method, a band used in the 802.11p technology is a 5.9 G frequency band. Because frequency of the 5.9 G frequency band is excessively high, a penetration capability of the frequency band for obstacles such as a bad weather, a building, and a plant is not strong. Therefore, the technology can work only in a direct viewing case. However, the positioning method provided in this embodiment of this application is not required to work in a high frequency band, and therefore, a similar problem does not exist.

In this embodiment of this application, due to influence of factors such as an ionospheric change, a cloud change, and motion of a satellite, a satellite signal dynamically changes, and a path passed by the satellite signal dynamically changes. Therefore, an error between location data determined based on the satellite signal and accurate location data changes accordingly, in other words, calibration data dynamically changes. Therefore, the access network device may continuously update the first satellite signal received from the satellite system. For example, in step 801, the access network device may periodically receive the first satellite signal sent by the satellite system, to obtain a real-time first satellite signal, so as to obtain real-time second location data of the access network device based on the first satellite signal. Further, the access network device may determine real-time calibration data based on the real-time second location data, to send the real-time calibration data to the terminal. In addition, the terminal may periodically receive, in step 806, the second satellite signal sent by the satellite system, to obtain a real-time second satellite signal, so as to obtain real-time third location data of the terminal based on the second satellite signal. Therefore, the terminal can implement more precise positioning based on the real-time third location data and the real-time calibration data.

In the mobile communications network, according to different used transmission technologies, a communication mode used between the access network device and the terminal may mainly include broadcast and point-to-point transmission. In the point-to-point transmission mode, only one user, a destination terminal, can receive a message sent by the access network device; but in the broadcast transmission mode, all terminals within the coverage of the access network device can receive the message sent by the access network device.

Corresponding to the two transmission modes, in step 804, the access network device may also send the calibration data to the terminal in the broadcast or point-to-point transmission mode. Specifically, the access network device may agree with a terminal side on a communication format used to transmit a calibration data packet. After receiving a message in the communication format, the terminal side may learn that it is the calibration data that is transmitted in the message, so as to perform positioning based on the calibration data. A specific communication format for transmitting the calibration data is not limited in this embodiment of this application.

In a first implementation according to an illustrative example not being part of the claimed invention, step 804 may include the following step:

8041: The access network device sends the calibration data to the terminal in the broadcast transmission mode, where the broadcast transmission mode includes a broadcast message or a multimedia broadcast multicast service MBMS.

Corresponding to step 8041, step 805 may, in an illustrative example not being part of the claimed invention specifically include the following step:
8051: The terminal receives at least one group of calibration data sent by at least one access network device in the broadcast transmission mode.

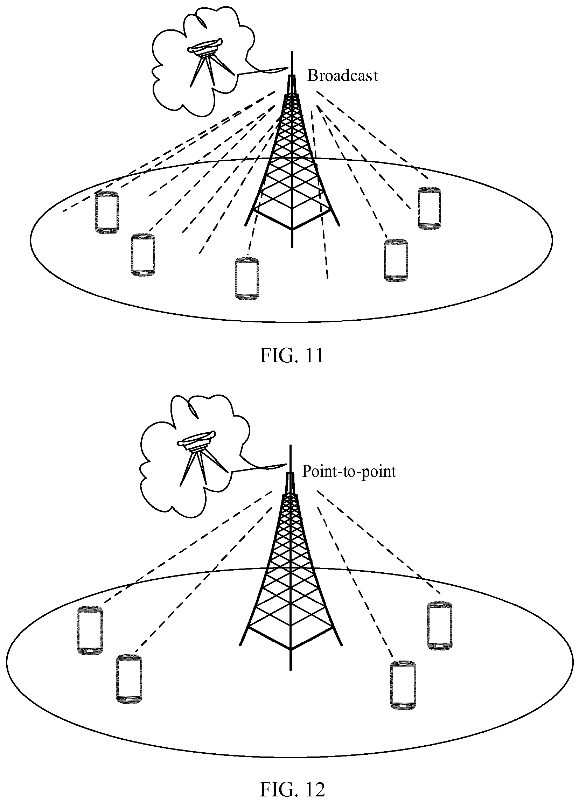

For example, an example in which the terminal is a vehicle-mounted device is used, and for a schematic diagram of a scenario in which the access network device exchanges calibration data with the terminal in the broadcast transmission mode, refer to FIG. 10; or an example in which the terminal is a mobile phone is used, and for a schematic diagram of a scenario in which the access network device exchanges calibration data with the terminal in the broadcast transmission mode, refer to FIG. 11.

In this implementation, the access network device may send the calibration data in the broadcast transmission mode, and all terminals within the network signal coverage of the access network device can receive the calibration data.

It should be noted that, because broadcast is unidirectional, no connection needs to be established, and no interaction with the terminal is required. Transmission reliability may be ensured by using a higher layer protocol or does not need to be ensured. After accessing a network, the terminal may receive the calibration data through broadcasting, and does not need to further authenticate permission such as a call fee. Therefore, the mode in which the calibration data is sent in the broadcast transmission mode is simpler and faster, and has a shorter delay, better realtimeness, a higher network capacity, and higher efficiency.

Specifically, the access network device may exchange calibration data with the terminal in the broadcast transmission mode such as the broadcast message or the multimedia broadcast multicast service MBMS. It should be emphasized that, in the prior art, a broadcast message is usually used to send basic information about an access network device to implement a basic function such as terminal access. For example, the basic information may include configuration information, cell selection/reselection information, earthquake and tsunami warning information that are same in all terminals. The basic information is different from broadcast service data. However, in this embodiment of this application, the access network device adds the service data, which is the calibration data, to the broadcast message, and sends the broadcast message to the terminal, so that the terminal can receive the calibration data in time, to perform precise positioning based on the calibration data.

In another specific implementation according to an illustrative example not being part of the claimed invention, the access network device may further send the calibration data to the terminal based on the multimedia broadcast multicast service MBMS. In terms of capacity, the MBMS provides a point-to-multipoint transmission multimedia service mode. Resource consumption is not related to increase of a quantity of users, thereby saving an air interface resource and a transmission resource, and avoiding a disadvantage of a mobile network capacity.

For a moving terminal, especially a terminal moving at a high speed, for example, a vehicle-mounted device and a mobile phone of a user moving at a high speed on a road, because a location of the terminal changes in real time, a requirement for realtimeness of calibration data is also higher during precise positioning. Sending calibration data in the broadcast transmission mode can meet the requirement for realtimeness of calibration data of the terminal moving at a high speed, thereby implementing precise positioning.

In addition, in the differential GNSS positioning solution in the prior art, a point-to-point transmission mode in which the reference station is separated from the access network is usually used, and the reference station transmits calibration data in a point-to-point mode by using a data link that includes the access network and the core network. Because the reference station is not integrated with the access network device, the point-to-point communication mode requires transmission of the core network. A transmission delay is increased due to increase of a transmission distance and load of the core network. In addition, due to concurrent connection limit of the access network device, a quantity of terminals that simultaneously perform positioning by using the differential GNSS positioning solution is also limited.

However, in this illustrative example of this application, the reference station is integrated with the access network device, and the calibration data is transmitted in the broadcast transmission mode, and does not need to be transmitted by using the core network. Transmission realtimeness is ensured, and the broadcast transmission mode is not limited by a connection capability of the access network device. All terminals within the coverage of the access network device may receive the calibration data, and therefore, a quantity of terminals that can receive the calibration data is larger, and this implementation is more efficient and more implementable.

It should be noted that, to ensure power supply and network coverage, the access network device is usually arranged close to a road or a user. Therefore, a distance between the access network device and the terminal moving at a high speed on the road is very short. This can well meet a requirement of a mobile terminal on the road for positioning accuracy.

Specifically, in step 8041, the access network device may periodically send the calibration data to the terminal in the broadcast transmission mode, so that the terminal within the coverage of the access network device can obtain calibration data updated in real time, so as to implement precise positioning based on the updated calibration data. A period herein may be determined based on a moving speed of the terminal and a requirement on positioning accuracy. A higher moving speed of the terminal indicates higher positioning accuracy, a higher realtimeness requirement, and a shorter sending period of the calibration data. For example, the period herein may be 10s (second).

In addition, information amount of data that can be sent in the broadcast transmission mode such as the broadcast message or the multimedia broadcast multicast service MBMS may be relatively large, and a sending interval may also be relatively short. Therefore, high bandwidth communication may further be implemented in the mode in which the calibration data is sent in the broadcast transmission mode.

In a second implementation according to the claimed invention, step 804 may include the following step:
8042: The access network device sends the calibration data to the terminal in the point-to-point transmission mode.

Corresponding to step 8042, step 805 may specifically include the following step:
8052: The terminal receives, in the point-to-point transmission mode, the at least one group of calibration data sent by the at least one access network device.

For example, an example in which the terminal is a mobile phone is used, for a schematic diagram of a scenario in which the access network device exchanges the calibration data with the terminal in the broadcast transmission mode, refer to FIG. 12.

The point-to-point transmission mode requires that data interaction be performed only after the terminal establishes a connection to the access network device. Therefore, transmission reliability and security of the calibration data are higher than those in the broadcast transmission mode. However, because the terminal needs to establish the connection to the access network device, a delay may be caused during handover of a communication cell. Consequently, transmission realtimeness of the point-to-point transmission mode is poorer than that of the broadcast transmission mode. Therefore, the point-to-point transmission mode may be applicable to positioning of a terminal having high reliability and security. In addition, because the calibration data is more reliable, the positioning accuracy is also higher.

Specifically, in the point-to-point transmission mode, the terminal may interact with the access network device, to establish a connection to the access network device, and receive, after the connection is established, the calibration data sent by the access network device. For example, in a connection establishment process, the terminal may send a connection request message to the access network device, and the access network device may send a connection acknowledgement message to the terminal.

Because the calibration data changes in real time, in the point-to-point transmission mode, the access network device may periodically send the calibration data to the terminal, or the terminal may periodically obtain the calibration data from the access network device, or the terminal may obtain the calibration data from the access network device when necessary. In this way, the terminal can implement precise positioning based on obtained new calibration data.

In addition, in this implementation of this embodiment of this application, although the point-to-point transmission modes is also used, different from a prior-art case in which the reference station is separated from the access network and calibration data is transmitted in the point-to-point mode by using a data link that includes the core network. In this embodiment of this application, the function of the reference station is integrated into the access network device, and the reference station sends the calibration data by using the internal network of the access network without using the core network. Therefore, compared with the prior art, the transmission link is shorter and transmission realtimeness is better.

Therefore, in this embodiment of this application, the reference station is integrated with the access network device, the calibration data is measured and calculated in real time, and the calibration data is sent to the terminal within the coverage in real time. Therefore, it can be ensured that a distance between the terminal and the access network device integrated with the function of the reference station is relatively short, better realtimeness is achieved, accuracy and realtimeness of the calibration data in the differential GNSS technology meet an algorithm requirement, differential GNSS positioning accuracy of the terminal reaches an ideal level, and the positioning accuracy is improved.

When the at least one group of calibration data received by the terminal in step 805 is a plurality of groups of calibration data, in step 808, that the terminal determines the accurate location of the terminal based on the at least one group of calibration data and the third location data may include the following steps:
8081: The terminal determines a group of target calibration data based on the plurality of groups of calibration data.
8082: The terminal determines the accurate location of the terminal based on the target calibration data and the third location data.

The target calibration data in step 8081 may be one of the plurality of groups of calibration data received by the terminal, or may be a group of target calibration data obtained by processing the plurality of groups of calibration data by using an optimization algorithm or a merging algorithm. That is, when the terminal receives the plurality of groups of calibration data, the terminal may determine a group of target calibration data based on the plurality of groups of calibration data, to perform precise positioning based on the target calibration data. When the terminal receives a group of calibration data, the group of calibration data is the target calibration data.

For example, in an implementation, as shown in FIG. 13, when the terminal receives the plurality of groups of calibration data, the target calibration data may be a group of calibration data sent by an access network device closest to the terminal. Because positioning accuracy is related to a distance between the terminal and the access network device, when an access network device is closer to the terminal, accuracy of positioning performed by the terminal based on calibration data sent by the access network device is higher.

For example, the terminal stores priorities respectively corresponding to different access network devices, and when the terminal receives the plurality of groups of calibration data, the target calibration data may be a group of calibration data sent by an access network device having a highest priority. The priority of the access network device may be set based on an actual requirement. For example, a priority corresponding to an access network device close to the terminal is high. For another example, when the calibration data is exchanged in the point-to-point transmission mode, an access network device to which a small quantity of terminals are connected has a high priority.

For example, when the terminal receives the plurality of groups of calibration data, each parameter in the target calibration data may be an average value of corresponding parameters in the plurality of groups of calibration data. In this way, the terminal may obtain a piece of comprehensive target calibration data by combining calibration data sent by different access network devices, to perform precise positioning.

In addition, in step 805, when the terminal receives only one group of calibration data, the terminal may directly perform precise positioning based on the calibration data. It may also be understood that when the terminal receives only one group of calibration data, the group of calibration data is the target calibration data.

In this embodiment of this application, the calibration data may specifically include differential data of the first location data and the second location data. The first location data and the second location data may specifically include at least one of longitude and latitude, a pseudorange, a code phase, and a carrier phase. Therefore, correspondingly, the differential data of the first location data and the second location data may also specifically include at least one of a longitude and latitude differential value, a distance differential value, a code phase differential value, and a carrier phase differential value. The terminal may determine the accurate location of the terminal based on the differential data.

After receiving the calibration data, the terminal may directly determine the accurate location of the terminal based on the differential data in the calibration data and the third location data, or the terminal may determine the accurate location of the terminal based on the third location data after processing the differential data in the calibration data.

For example, in a simple implementation, the calibration data may be a longitude and latitude differential value of the first location data and the second location data, and the terminal may determine the accurate location of the terminal based on the third location data and the differential data of the calibration data. For example, if the first location data is "22°38'17.58" N, 114°05'53.45" E", the second location data is "22°38'16.54" N, 114°05'51.35" E", the calibration data is the differential data of the first location data and the second location data, that is, "+1.04" N, +2.1" E", and the third location data is "22°35'13.24" N, 114°06'36.70" E", the terminal may determine that the accurate location of the terminal is a location indicated by a sum of the third location data and the differential data "+1.04" N, +2.1" E", that is, the location indicated by "22°35'14.28" N, 114°06'38.80" E".

Alternatively, in this embodiment of this application, the calibration data may include the first location data and the second location data. After receiving the first location data and the second location data, the terminal may process the first location data and the second location data, and then determine the accurate location of the terminal based on the processed data. For example, the terminal may first calculate the differential data of the first location data and the second location data, and then determine the accurate location of the terminal based on the differential data.

Alternatively, in this embodiment of this application, the calibration data may include the first location data, the second location data, and the differential data of the first location data and the second location data.

Specifically, the group of target calibration data determined by the terminal based on the plurality of groups of calibration data may also include the first location data and the second location data of the access network device, or include the differential data of the first location data and the second location data of the access network device, or include the first location data, the second location data, and the differential data of the first location data and the second location data. When the target calibration data includes the first location data and the second location data, that the terminal determines the accurate location of the terminal based on the target calibration data and the third location data may include: determining, by the terminal, the differential data of the first location data and the second location data in the target calibration data, and determining, by the terminal, the accurate location of the terminal based on the differential data and the third location data.

It should be noted that, because a quantity of access network devices in the mobile communications network is large and the access network devices are widely distributed, when the terminal falls within the network signal coverage of the access network device, positioning accuracy of the terminal may usually be satisfied. In addition, requirements for positioning accuracy are different, and requirements for distances between the terminal and the access network devices are also different. Therefore, not each access network device in the mobile communications network needs to be integrated with the function of the reference station, and specifically, the access network devices in this embodiment of this application may be disposed at intervals based on an actual requirement. That is, referring to FIG. 14, the function of the reference station is integrated into some access network devices that are disposed at an interval.

In addition, it should be further noted that the positioning method provided in this embodiment of this application is mainly used to determine the accurate location of the terminal, and based on the precise positioning technology, functions such as speed detection, navigation, and timing may be further implemented.

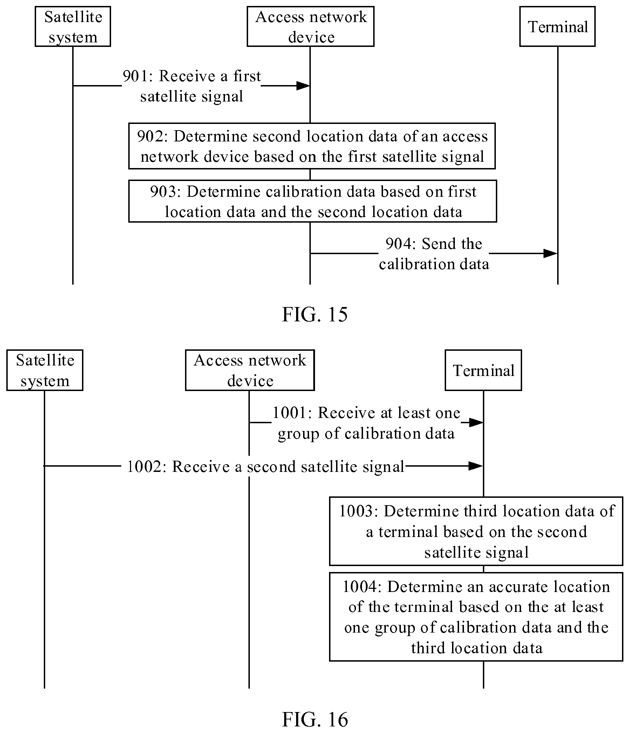

An embodiment of this application further provides a positioning method. The method may be applied to an access network device, the access network device stores first location data of the access network device, and the first location data is used to indicate an accurate location of the access network device. Referring to FIG. 15, the method may include the following steps.

901: The access network device receives a first satellite signal from a satellite system.

902: The access network device determines second location data of the access network device based on the first satellite signal.

903: The access network device determines calibration data based on the first location data and the second location data.

The first location data herein is data obtained through manual measurement, and is data used to describe the accurate location of the access network device. When a type of a data parameter included in the second location data is different from a type of a data parameter included in the first location data, the access network device may first convert the second location data and the first location data into data parameters of a same type, and then determine the calibration data.

904: The access network device sends the calibration data to a terminal, where the calibration data is used by the terminal to determine an accurate location of the terminal.

When a type of a data parameter included in the calibration data is different from a type of a data parameter included in the third location data, the access network device may first convert the third location data and the calibration data into data parameters of a same type, and then determine the accurate location of the terminal based on the calibration data and the third location data.

For the access network device, a GNSS module not only implements clock synchronization between the access network devices by receiving the satellite signal, but also determines the calibration data based on the satellite signal, so that the access network device may send the calibration data to the terminal for precise positioning.

In the positioning method provided in this embodiment of this application, a function of a reference station is integrated into the access network device by using features that the access network devices are widely distributed in a mobile communications network and a quantity of the access network devices is relatively large, the calibration data is determined by the access network device, and the calibration data is sent to a terminal within network signal coverage of the access network device, so that the terminal may receive calibration data sent by a nearby access network device, to determine the accurate location of the terminal based on the calibration data. In this way, a distance between the terminal and the access network device that sends the calibration data may be relatively short, so that accuracy of positioning performed by the terminal based on the calibration data can be improved, and a positioning error can be reduced.

In addition, because the access network devices are widely distributed and the quantity of the access network devices is relatively large, the coverage of the access network device is wide, and a terminal at any location may fall within network signal coverage of one or more access network devices. Therefore, the terminal can receive the calibration data sent by the nearby access network device in a short distance, to perform precise positioning.

In addition, in this embodiment of this application, the function of the reference station is integrated into the access network device, so that the calibration data is directly measured and calculated by the access network device, and the calibration data is directly sent to the terminal within the coverage of the access network device, rather than being transmitted by using a core network as in the prior art. The access network device may directly send the calibration data to the terminal by using an internal network, so that a transmission delay is short, transmission realtimeness of the calibration data is good and is not limited by traffic load of the core network. That is, in this embodiment of this application, the access network device may send the measured calibration data to the terminal within the coverage in real time, so that the terminal can perform precise positioning based on the calibration data obtained in real time.

In step 904, that the access network device sends the calibration data to a terminal may, in an illustrative example not being part of the claimed invention, include the following step:
9041: Send the calibration data to the terminal in a broadcast transmission mode, where the broadcast transmission mode includes a broadcast message or a multimedia broadcast multicast service MBMS.

Sending the calibration data in the broadcast transmission mode may enable all terminals within the network signal coverage of the access network device to receive the calibration data. In addition, because broadcast is unidirectional, no connection needs to be established, and no interaction with the terminal is required. Transmission reliability may be ensured by using a higher layer protocol or does not need to be ensured. After accessing a network, the terminal may receive data sent in the broadcast transmission mode, so that the mode in which the calibration data is sent in the broadcast transmission mode is simpler and faster, and has a shorter delay, better realtimeness, a higher network capacity, and higher efficiency.

In addition, the access network device transmits the calibration data in the broadcast transmission mode, so that realtimeness of transmission can be ensured, the broadcast transmission mode is not limited by a connection capability of the access network device, and a quantity of terminals that can receive the calibration data is larger. In addition, sending the calibration data in the broadcast transmission mode can meet a requirement for realtimeness of the calibration data of the terminal moving at a high speed, thereby implementing precise positioning.

Specifically, that the access network device sends the calibration data to the terminal in a broadcast transmission mode in step 9041 may include: periodically sending, by the access network device, the calibration data to the terminal in the broadcast transmission mode.

In this way, the access network device may send calibration data that dynamically changes to the terminal in real time, so that the terminal can perform precise positioning based on the received real-time calibration data.

In step 904, according to the claimed invention, that the access network device sends the calibration data to a terminal includes the following step:
9042: The access network device sends the calibration data to the terminal in a point-to-point transmission mode.

The point-to-point transmission mode for transmitting the calibration data has higher reliability and security than the broadcast transmission mode does. In addition, different from a prior-art case in which the reference station transmits the calibration data in the point-to-point mode by using a data link that includes an access network and the core network, in this embodiment of this application, the calibration data is sent by the access network device and is not sent by using the core network. Therefore, in this solution, a transmission link is shorter than that in the prior art and transmission realtimeness is better than that in the prior art.

The calibration data determined by the access network device may include differential data of the first location data and the second location data, and the differential data includes at least one of a longitude and latitude differential value, a distance differential value, a code phase differential value, and a carrier phase differential value; or the differential data may include the first location data and the second location data.

An embodiment of this application further provides a positioning method. The positioning method may be applied to a terminal. Referring to FIG. 16, the method may include the following steps.

1001: The terminal receives at least one group of calibration data sent by at least one access network device.

Because network signal coverage of different access network devices may overlap, the terminal may fall within network signal coverage of a plurality of access network devices. Therefore, the terminal may receive calibration data separately sent by one or more access network devices.

The calibration data is data obtained by the access network device based on first location data and second location data. The first location data is used to indicate an accurate location of the access network device, and is usually obtained through manual measurement. The second location data is location data obtained by the access network device based on a first satellite signal. The calibration data may include the first location data and the second location data of the access network device, or the calibration data may include differential data of the first location data and the second location data, and the differential data includes at least one of a longitude and latitude differential value, a distance differential value, a code phase differential value, and a carrier phase differential value.

1002: The terminal receives a second satellite signal from a satellite system.

1003: The terminal determines third location data of the terminal based on the second satellite signal.

1004: The terminal determines an accurate location of the terminal based on the at least one group of calibration data and the third location data.

For the terminal, a GNSS module may specifically include a processor. The processor in the GNSS module may receive the calibration data, and determine the accurate location of the terminal with reference to the third location data. Alternatively, the processor in the GNSS module may import the third location data into a main processor of the terminal, and the main processor determines the accurate location of the terminal with reference to the third location data and the received calibration data. In addition, when an RTK mode is used, the GNSS module may be specifically configured to measure a signal phase, and can provide a calculation capability to calculate the accurate location of the terminal.

In the positioning method provided in this embodiment of this application, the terminal may receive calibration data sent by an access network device that is integrated with a function of a reference station, so that a distance between the terminal and the access network device that sends the calibration data may be relatively short. In addition, the calibration data does not need to be transmitted by using a core network, so that transmission realtimeness of the calibration data is better, thereby improving accuracy of positioning performed by the terminal based on the calibration data and reducing a positioning error.

In step 1001, that the terminal receives at least one group of calibration data sent by at least one access network device includes: receiving, by the terminal in a broadcast transmission mode, the at least one group of calibration data sent by the at least one access network device, where the broadcast transmission mode includes a broadcast message or a multimedia broadcast multicast service MBMS. Specifically, the terminal may periodically receive, in the broadcast transmission mode, the at least one group of calibration data sent by the at least one access network device.

Because broadcast is unidirectional, no connection needs to be established, and no interaction with the terminal is required. Transmission reliability may be ensured by using a higher layer protocol or does not need to be ensured. After accessing a network, the terminal may receive data sent in the broadcast transmission mode, so that the mode in which the calibration data is sent in the broadcast transmission mode is simpler and faster, and has a shorter delay, better realtimeness, a higher network capacity, and higher efficiency.

Alternatively, in step 1001, that the terminal receives at least one group of calibration data sent by at least one access network device includes: receiving, by the terminal in a point-to-point transmission mode, the at least one group of calibration data sent by the at least one access network device.

The calibration data received in the point-to-point transmission mode has higher reliability and security than that received in the broadcast transmission mode does. In addition, different from a prior-art case in which the terminal receives, by using a data link that includes an access network and the core network, the calibration data sent by the reference station in the point-to-point transmission mode, in this embodiment of this application, the terminal receives the calibration data sent by the access network, and the calibration data is not forwarded by using the core network. Therefore, in this solution, a transmission link is shorter than that in the prior art and transmission realtimeness is better than that in the prior art.

When the at least one group of calibration data received by the terminal in step 1001 is a plurality of groups of calibration data, in step 1004, that the terminal determines an accurate location of the terminal based on the at least one group of calibration data and the third location data may include: determining, by the terminal, a group of target calibration data based on the plurality of groups of calibration data; and determining, by the terminal, the accurate location of the terminal based on the target calibration data and the third location data.

The target calibration data herein may be one of the at least one group of calibration data received by the terminal, or may be a group of target calibration data obtained by processing at least two groups of calibration data by using an optimization algorithm or a merging algorithm.

Specifically, when the terminal receives a plurality of groups of calibration data, the target calibration data may be a group of calibration data sent by an access network device closest to the terminal; or the target calibration data may be a group of calibration data sent by an access network device having a highest priority; or each parameter in the target calibration data is an average value of corresponding parameters in the plurality of groups of calibration data received by the terminal.

When the target calibration data includes the first location data and the second location data, that the terminal determines an accurate location of the terminal based on the target calibration data and the third location data in step 1004 may include: determining, by the terminal, the differential data of the first location data and the second location data in the target calibration data; and then determining, by the terminal, the accurate location of the terminal based on the differential data and the third location data.

The foregoing mainly describes the solution provided in this embodiment of this application from the perspective of interaction between network elements. It may be understood that, to implement the foregoing functions, each network element, for example, a server or the terminal, includes a corresponding hardware structure and/or software module for performing each function. A person skilled in the art should easily be aware that, in combination with the examples described in the embodiments disclosed in this specification, algorithms steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, function module division may be performed on the server and the terminal according to the foregoing method examples. For example, each function module may be obtained by division according to a corresponding function, or two or more functions may be integrated into one processing module. The integrated module may be implemented in a form of hardware, or may be implemented in a form of a software function module. It should be noted that the module division in the embodiments of this application is an example, and is merely logical function division. There may be another division manner during actual implementation.

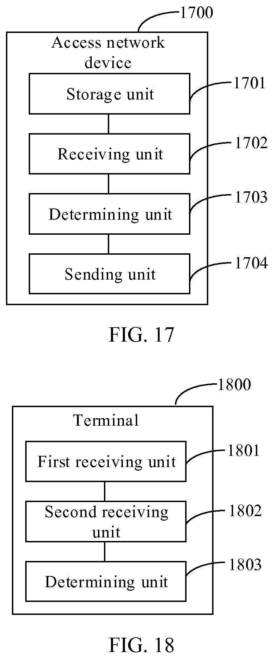

An embodiment of this application further provides an access network device. Referring to FIG. 17, the access network device 1700 includes a storage unit 1701, a receiving unit 1702, a determining unit 1703, and a sending unit 1704. The storage unit 1701 is configured to store first location data of the access network device 1700, and the first location data is used to indicate an accurate location of the access network device. The receiving unit 1702 is configured to support the access network device 1700 in performing step 801 in FIG. 8 and step 901 in FIG. 15. The determining unit 1703 is configured to support the access network device 1700 in performing step 802 and step 803 in FIG. 8 and steps 902 and 903 in FIG. 15. The sending unit 1704 is configured to support the access network device 1700 in performing step 804 in FIG. 8 and step 904 in FIG. 15. The foregoing units are further configured to support other processes of the technology described in this specification.

An embodiment of this application further provides a terminal. Referring to FIG. 18, the terminal 1800 includes a first receiving unit 1801, a second receiving unit 1802, and a determining unit 1803. The first receiving unit 1801 is configured to support the terminal 1800 in performing step 805 in FIG. 8 and step 1001 in FIG. 16. The second receiving unit 1802 is configured to support the terminal 1800 in performing step 806 in FIG. 8 and step 1002 in FIG. 16. The determining unit 1803 is configured to support the terminal 1800 in performing step 807 and step 808 in FIG. 8, and steps 1003 and 1004 in FIG. 16. The foregoing units are further configured to support other processes of the technology described in this specification.

It should be noted that all related content of steps in the foregoing method embodiments may be cited in function descriptions of corresponding function modules, and details are not described herein again.

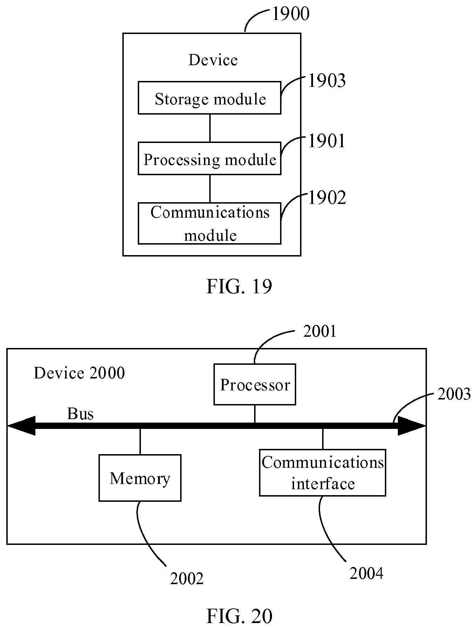

When an integrated unit is used, FIG. 19 is a schematic diagram of possible composition of a device, and the device may be the access network device or the terminal in the foregoing embodiments. As shown in FIG. 19, the device 1900 may include a processing module 1901, a communications module 1902, and a storage module 1903.

When the device 1900 is the access network device, the processing module 1901 is configured to control and manage an action of the access network device. For example, the processing module 1901 is configured to support the access network device in performing steps 802 and 803 in the positioning method shown in FIG. 8, and steps 902 and 903 in the positioning method shown in FIG. 15, and/or is used in other processes of the technology described in this specification. The communications module 1902 is configured to support the access network device in communicating with another network entity, for example, support the access network device in performing steps 801 and 804 shown in FIG. 8, and steps 901 and 904 in FIG. 15. The storage module 1903 is configured to store program code and data of a terminal, for example, store accurate location data of the access network device.

When the device 1900 is the terminal, the processing module 1901 is configured to control and manage an action of the terminal. For example, the processing module 1901 is configured to support the terminal in performing steps 807 and 808 in the positioning method shown in FIG. 8, and steps 1003 and 1004 in the positioning method shown in FIG. 16, and/or is used in other processes of the technology described in this specification. The communications module 1902 is configured to support the terminal in communicating with another network entity, for example, support the terminal in performing steps 805 and 806 shown in FIG. 8, and steps 1001 and 1002 in FIG. 16. The storage module 1903 is configured to store program code and data of the terminal.

The processing module 1901 may be a processor or a controller. The processing module 1901 may implement or execute various example logical blocks, modules, and circuits described with reference to the embodiment of this application. The processor may also be a combination of computing functions, for example, a combination of one or more microprocessors or a combination of a microprocessor (digital signal processor, DSP) and a microprocessor. The communications module 1902 may be a transceiver, a transceiver circuit, a communications interface, or the like. The storage module 1903 may be a memory.

The foregoing descriptions about implementations allow a person skilled in the art to clearly understand that, for the purpose of convenient and brief description, division of the foregoing function modules is merely used as an example for illustration. In actual application, the foregoing functions can be allocated to different function modules and implemented based on a requirement, that is, an inner structure of an apparatus is divided into different function modules to implement all or some of the functions described above.

FIG. 20 is a schematic structural diagram of another device according to an embodiment of this application. The device may be an access network device or a terminal. The device 2000 may include a processor 2001, a memory 2002, a bus 2003, and a communications interface 2004. The processor 2001, the memory 2002, and the communications interface 2004 are connected by using the system bus 2003. The memory 2002 is configured to store a computer-executable instruction. When the terminal runs, the processor 2001 executes the computer-executable instruction stored in the memory 2002, so that the terminal performs the positioning method provided in the embodiments of the present invention. For a specific positioning method, refer to the following descriptions and related descriptions in the accompanying drawings. Details are not described herein again.

Specifically, the processor 2001 may further correspond to a function of the processing module 1901, the memory 2002 may correspond to a function of the storage module 1903, and the communications interface 2004 may correspond to a function of the communications module 1902.

In addition, when the device 2000 is the access network device, the processor 2001 may correspond to a function of the determining unit 1703, the memory 2002 may correspond to a function of the storage unit 1701, and the communications interface 2004 may correspond to a function of the receiving unit 1702 and the foregoing sending unit 1704.

When the device 2000 is the terminal, the processor 2001 may correspond to a function of the determining unit 1803, and the communications interface 2004 may correspond to functions of the first receiving unit 1801 and the second receiving unit 1802.

An embodiment of this application further provides a computer storage medium, configured to store a computer software instruction for use by the foregoing access network device. When the computer software instruction is run on the access network device, the access network device may be enabled to perform the positioning method in the foregoing embodiment. For example, the storage medium may be specifically the memory 2002.

An embodiment of this application further provides a computer storage medium, configured to store a computer software instruction for use by the foregoing terminal. When the computer software instruction is run on the terminal, the terminal may be enabled to perform the positioning method in the foregoing embodiment.

An embodiment of this application further provides a computer program product including an instruction, and when the computer program product is run on the foregoing access network device, the access network device may be enabled to perform the positioning method in the foregoing embodiment.

An embodiment of this application further provides a computer program product including an instruction, and when the computer program product is run on the foregoing terminal, the terminal may be enabled to perform the positioning method in the foregoing embodiment.

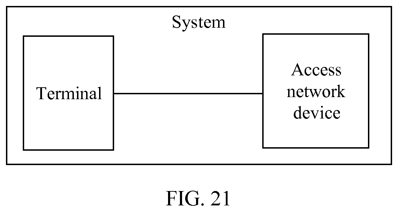

Referring to FIG. 21, an embodiment of this application further provides a system, and the system may include an access network device and a terminal. The access network device and the terminal in the system may perform the positioning method provided in the foregoing embodiment of this application.

The access network device stores first location data of the access network device, and the first location data is used to indicate an accurate location of the access network device. The access network device may be configured to: receive a first satellite signal from a satellite system; determine second location data of the access network device based on the first satellite signal; determine calibration data based on the first location data and the second location data; and send the calibration data to the terminal.

The terminal may be configured to: receive at least one group of calibration data sent by at least one access network device; receive a second satellite signal from the satellite system; determine third location data of the terminal based on the second satellite signal; and determine an accurate location of the terminal based on the at least one group of calibration data and the third location data.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instruction is loaded and executed on a computer, the procedure or functions according to the embodiments of this application are all or partially generated. The computer may be a general-purpose computer, a dedicated computer, a computer network, or other programmable apparatuses. The computer instruction may be stored in a computer-readable storage medium or may be transmitted from one computer-readable storage medium to another computer-readable storage medium. For example, the computer instruction may be transmitted from a website, a computer, a server, or a data center to another website, computer, server, or data center in a wired (for example, through a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to the embodiments, in a process of implementing this application that claims protection, a person skilled in the art may understand and implement other variations of the disclosed embodiments by viewing the accompanying drawings, disclosed content, and the accompanying claims. In the claims, "comprising" (comprising) does not exclude another component or another step, and "a" or "one" does not exclude a case of a plurality of. A single processor or another unit may implement several functions enumerated in the claims. Some measures are recorded in dependent claims that are different from each other, but this does not mean that these measures cannot be combined to produce a better effect.

## Claims

1. A positioning method, wherein the method comprises:
agreeing, by a terminal (13; 200; 300; 1800; 1900; 2000) with each of at least one access network device (14; 1700; 1900; 2000), on a respective communication format for transmitting a calibration data packet from the respective access network device (14; 1700; 1900; 2000) to the terminal (13; 200; 300; 1800; 1900; 2000);
receiving (805; 1001), by the terminal (13; 200; 300; 1800; 1900; 2000) in a point-to-point transmission mode, at least one group of calibration data sent by the at least one access network device (14; 1700; 1900; 2000) using the respective communication format, wherein in the point-to-point transmission mode the at least one group of calibration data is sent by the at least one access network device (14; 1700; 1900; 2000) to the terminal (13; 200; 300; 1800; 1900; 2000) only;
receiving (806; 1002), by the terminal, a second satellite signal from a satellite system (12);
determining (807; 1003), by the terminal, third location data of the terminal based on the second satellite signal; and
determining (808; 1004), by the terminal, an accurate location of the terminal based on the at least one group of calibration data and the third location data;
wherein the at least one group of calibration data comprises a plurality of groups of calibration data, and the determining (808; 1004), by the terminal, an accurate location of the terminal based on the at least one group of calibration data and the third location data comprises:
determining, by the terminal, a group of target calibration data based on the plurality of groups of calibration data; and
determining, by the terminal, the accurate location of the terminal based on the target calibration data and the third location data;
wherein the target calibration data is a group of calibration data sent by an access network device having a highest priority, and wherein the access network device having a highest priority is an access network device to which a smallest quantity of terminals is connected.

2. The method according to claim 1, wherein the target calibration data comprises first location data and second location data of the access network device (14; 1700; 1900; 2000), the first location data is used to indicate an accurate location of the access network device, the second location data is location data obtained by the access network device based on a first satellite signal, and the determining, by the terminal (13; 200; 300; 1800; 1900; 2000), the accurate location of the terminal based on the target calibration data and the third location data comprises:
determining, by the terminal, differential data of the first location data and the second location data in the target calibration data; and
determining, by the terminal, the accurate location of the terminal based on the differential data and the third location data.

3. The method according to claim 1, wherein the calibration data comprises first location data and second location data of the access network device (14; 1700; 1900; 2000), the first location data is used to indicate an accurate location of the access network device, and the second location data is location data obtained by the access network device based on a first satellite signal; or the calibration data comprises differential data of the first location data and the second location data, and the differential data comprises at least one of a longitude and latitude differential value, a distance differential value, a code phase differential value, and a carrier phase differential value.

4. A terminal (13; 200; 300; 1800; 1900; 2000), comprising:
a first receiving unit (1801), configured to agree, with each of at least one access network device (14; 1700; 1900; 2000), on a respective communication format for transmitting a calibration data packet from the respective access network device (14; 1700; 1900; 2000) to the terminal (13; 200; 300; 1800; 1900; 2000) and to receive (805; 1001) at least one group of calibration data sent by the at least one access network device (14; 1700; 1900; 2000) using the respective communication format;
a second receiving unit (1802), configured to receive (806; 1002) a second satellite signal from a satellite system (12); and
a determining unit (1803), configured to determine (807; 1003) third location data of the terminal based on the second satellite signal,
wherein the determining unit (1803) is further configured to determine (808; 1004) an accurate location of the terminal based on the at least one group of calibration data and the third location data,
wherein the first receiving unit (1801) is specifically configured to:
receive (805; 1001), in a point-to-point transmission mode, the at least one group of calibration data sent by the at least one access network device, wherein in the point-to-point transmission mode the at least one group of calibration data is sent by the at least one access network device (14; 1700; 1900; 2000) to the terminal (13; 200; 300; 1800; 1900; 2000) only
wherein the at least one group of calibration data comprises a plurality of groups of calibration data, and the determining unit (1803) is specifically configured to:
determine a group of target calibration data based on the plurality of groups of calibration data; and
determine the accurate location of the terminal based on the target calibration data and the third location data;
wherein the target calibration data is a group of calibration data sent by an access network device having a highest priority, and wherein the access network device having a highest priority is an access network device to which a smallest quantity of terminals is connected.

## Patentansprüche

1. Positionierungsverfahren, wobei das Verfahren Folgendes umfasst:
Vereinbaren eines jeweiligen Kommunikationsformats zum Übertragen eines Kalibrierungsdatenpakets von der jeweiligen Zugangsnetzeinrichtungt (14; 1700; 1900; 2000) zu dem Endgerät (13; 200; 300; 1800; 1900; 2000) durch ein Endgerät (13; 200; 300; 1800; 1900; 2000) mit jeder von mindestens einer Zugangsnetzeinrichtung (14; 1700; 1900; 2000);
Empfangen (805; 1001) mindestens einer Gruppe von Kalibrierungsdaten, die durch die mindestens eine Zugangsnetzeinrichtung (14; 1700; 1900; 2000) unter Verwendung des jeweiligen Kommunikationsformats gesendet wird, durch das Endgerät (13; 200; 300; 1800; 1900; 2000) in einem Punkt-zu-Punkt-Übertragungsmodus, wobei in dem Punkt-zu-Punkt-Übertragungsmodus die mindestens eine Gruppe von Kalibrierungsdaten durch die mindestens eine Zugangsnetzeinrichtung (14; 1700; 1900; 2000) nur an das Endgerät (13; 200; 300; 1800; 1900; 2000) gesendet wird;
Empfangen (806; 1002) eines zweiten Satellitensignals von einem Satellitensystem (12) durch das Endgerät;
Bestimmen (807; 1003) von dritten Standortdaten des Endgeräts durch das Endgerät basierend auf dem zweiten Satellitensignal; und
Bestimmen (808; 1004) eines präzisen Standorts des Endgeräts durch das Endgerät basierend auf der mindestens einen Gruppe von Kalibrierungsdaten und den dritten Standortdaten;
wobei die mindestens eine Gruppe von Kalibrierungsdaten eine Vielzahl von Gruppen von Kalibrierungsdaten umfasst und das Bestimmen (808; 1004) eines präzisen Standorts des Endgeräts durch das Endgerät basierend auf der mindestens einen Gruppe von Kalibrierungsdaten und den dritten Standortdaten Folgendes umfasst:
Bestimmen einer Gruppe von Zielkalibrierungsdaten durch das Endgerät basierend auf der Vielzahl von Gruppen von Kalibrierungsdaten; und
Bestimmen des präzisen Standorts des Endgeräts durch das Endgerät basierend auf den Zielkalibrierungsdaten und den dritten Standortdaten;
wobei die Zielkalibrierungsdaten eine Gruppe von Kalibrierungsdaten sind, die von einem Zugangsnetzgerät mit höchster Priorität gesendet werden, und wobei das Zugangsnetzgerät mit höchster Priorität ein Zugangsnetzgerät ist, mit dem die kleinste Anzahl von Endgeräten verbunden ist.

2. Verfahren nach Anspruch 1, wobei die Zielkalibrierungsdaten erste Standortdaten und zweite Standortdaten der Zugangsnetzvorrichtung(14; 1700; 1900; 2000) umfassen, die ersten Standortdaten verwendet werden, um einen präzisen Standort der Zugangsnetzwerkvorrichtung anzugeben, die zweiten Standortdaten sind, die von der Zugangsnetzwerkvorrichtung basierend auf einem ersten Satellitensignal erlangt werden, und das Bestimmen des präzisen Standorts des Endgeräts durch das Endgerät (13; 200; 300; 1800; 1900; 2000) basierend auf den Ziel-Kalibrierungsdaten und den dritten Standortdaten Folgendes umfasst:
Bestimmen von Differenzdaten der ersten Standortdaten und der zweiten Standortdaten in den Zielkalibrierungsdaten durch das Endgerät; und
Bestimmen des präzisen Standorts des Endgeräts durch das Endgerät basierend auf den Differenzdaten und den dritten Standortdaten.

3. Verfahren nach Anspruch 1, wobei die Kalibrierungsdaten erste Standortdaten und zweite Standortdaten der Zugangsnetzwerkvorrichtung (14; 1700; 1900; 2000) umfassen, die ersten Standortdaten verwendet werden, um einen präzisen Standort der Zugangsnetzwerkvorrichtung anzugeben, und die zweiten Standortdaten sind, die von der Zugangsnetzwerkvorrichtung basierend auf einem ersten Satellitensignal erlangt werden, oder
die Kalibrierungsdaten Differenzdaten der ersten Standortdaten und der zweiten Standortdaten umfassen und die Differenzdaten mindestens einen von einem Längen- und Breitengrad-Differenzwert, einem Entfernungs-Differenzwert, einem Code-Phasendifferenzwert und einem Trägerphasen-Differenzwert umfassen.

4. Endgerät (13; 200; 300; 1800; 1900; 2000), umfassend:
eine erste Empfangseinheit (1801), die dazu konfiguriert ist, mit jeder von mindestens einer Zugangsnetzwerkvorrichtung (14; 1700; 1900; 2000) eines jeweiligen Kommunikationsformats zum Übertragen eines Kalibrierungsdatenpakets von der jeweiligen Zugangsnetzwerkvorrichtung (14; 1700; 1900; 2000) zu dem Endgerät (13; 200; 300; 1800; 1900; 2000) zu vereinbaren und mindestens eine Gruppe von Kalibrierungsdaten zu empfangen (805; 1001), die durch die mindestens eine Zugangsnetzwerkvorrichtung (14; 1700; 1900; 2000) unter Verwendung des jeweiligen Kommunikationsformats gesendet werden;
eine zweite Empfangseinheit (1802), die dazu konfiguriert ist, ein zweites Satellitensignal von einem Satellitensystem (12) zu empfangen (806; 1002); und
eine Bestimmungseinheit (1803), die dazu konfiguriert ist, dritte Standortdaten des Endgeräts basierend auf dem zweiten Satellitensignal zu bestimmen (807; 1003),
wobei die Bestimmungseinheit (1803) ferner dazu konfiguriert ist, einen präzisen Standort des Endgeräts basierend auf der mindestens einen Gruppe von Kalibrierungsdaten und den dritten Standortdaten zu bestimmen (808; 1004),
wobei die erste Empfangseinheit (1801) insbesondere zu Folgendem konfiguriert ist:
Empfangen (805; 1001) mindestens einer Gruppe von Kalibrierungsdaten, die durch die mindestens einen Zugangsnetzgerät gesendet wird, in einem Punkt-zu-Punkt-Übertragungsmodus, wobei in dem Punkt-zu-Punkt-Übertragungsmodus die mindestens eine Gruppe von Kalibrierungsdaten durch die mindestens einen Zugangsnetzgerät (14; 1700; 1900; 2000) nur an das Endgerät (13; 200; 300; 1800; 1900; 2000) gesendet wird
wobei die mindestens eine Gruppe von Kalibrierungsdaten eine Vielzahl von Gruppen von Kalibrierungsdaten umfasst und die Bestimmungseinheit (1803) insbesondere zu Folgendem konfiguriert ist:
Bestimmen einer Gruppe von Zielkalibrierungsdaten basierend auf der Vielzahl von Gruppen von Kalibrierungsdaten; und
Bestimmen des präzisen Standorts des Endgeräts basierend auf den Zielkalibrierungsdaten und den dritten Standortdaten;
wobei die Zielkalibrierungsdaten eine Gruppe von Kalibrierungsdaten sind, die von einer Zugangsnetzgerät gesendet werden, die eine höchste Priorität aufweist, und wobei die Zugangsnetzgerät, die eine höchste Priorität aufweist, eine Zugangsnetzgerät ist, mit der eine kleinste Menge von Endgeräten verbunden ist.

## Revendications

1. Procédé de positionnement, dans lequel le procédé comprend :
l'accord, par un terminal (13 ; 200 ; 300 ; 1800 ; 1900 ; 2000) avec chacun d'au moins un dispositif de réseau d'accès (14 ; 1700 ; 1900 ; 2000), d'un format de communication respectif pour la transmission d'un paquet de données d'étalonnage provenant du dispositif de réseau d'accès respectif (14 ; 1700 ; 1900 ; 2000) au terminal (13 ; 200 ; 300 ; 1800 ; 1900 ; 2000) ;
la réception (805 ; 1001), par le terminal (13 ; 200 ; 300 ; 1800 ; 1900 ; 2000) dans un mode de transmission point à point, d'au moins un groupe de données d'étalonnage envoyées par les un ou plusieurs dispositifs de réseau d'accès (14 ; 1700 ; 1900 ; 2000) en utilisant le format de communication respectif, dans lequel, dans le mode de transmission point à point, les un ou plusieurs groupes de données d'étalonnage sont envoyés par les un ou plusieurs dispositifs de réseau d'accès (14 ; 1700 ; 1900 ; 2000) au terminal (13 ; 200 ; 300 ; 1800 ; 1900 ; 2000) uniquement ;
la réception (806 ; 1002), par le terminal, d'un second signal satellite provenant d'un système satellite (12) ;
la détermination (807 ; 1003), par le terminal, de troisièmes données de localisation du terminal sur la base du second signal satellite ; et
la détermination (808 ; 1004), par le terminal, d'une localisation précise du terminal sur la base des un ou plusieurs groupes de données d'étalonnage et des troisièmes données de localisation ;
dans lequel les un ou plusieurs groupes de données d'étalonnage comprennent une pluralité de groupes de données d'étalonnage, et la détermination (808 ; 1004), par le terminal, d'une localisation précise du terminal sur la base des un ou plusieurs groupes de données d'étalonnage et des troisièmes données de localisation comprend :
la détermination, par le terminal, d'un groupe de données d'étalonnage cibles sur la base de la pluralité de groupes de données d'étalonnage ; et
la détermination, par le terminal, de la localisation précise du terminal sur la base des données d'étalonnage cible et des troisièmes données de localisation ;
dans lequel les données d'étalonnage cibles sont un groupe de données d'étalonnage envoyées par un dispositif de réseau d'accès ayant une priorité la plus élevée, et dans lequel le dispositif de réseau d'accès ayant une priorité la plus élevée est un dispositif de réseau d'accès auquel une plus petite quantité de terminaux est connectée.

2. Procédé selon la revendication 1, dans lequel les données d'étalonnage cibles comprennent des premières et des deuxièmes données de localisation du dispositif de réseau d'accès (14 ; 1700 ; 1900 ; 2000), les premières données de localisation sont utilisées pour indiquer une localisation précise du dispositif de réseau d'accès, les deuxièmes données de localisation sont des données de localisation obtenues par le dispositif de réseau d'accès sur la base d'un premier signal satellite, et la détermination, par le terminal (13 ; 200 ; 300 ; 1800 ; 1900 ; 2000), de la localisation précise du terminal sur la base des données d'étalonnage cibles et des troisièmes données de localisation comprend :
la détermination, par le terminal, de données différentielles des premières données de localisation et des deuxièmes données de localisation dans les données d'étalonnage cibles ; et
la détermination, par le terminal, de la localisation précise du terminal sur la base des données différentielles et des troisièmes données de localisation.

3. Procédé selon la revendication 1, dans lequel les données d'étalonnage comprennent des premières données de localisation et des deuxièmes données de localisation du dispositif de réseau d'accès (14 ; 1700 ; 1900 ; 2000), les premières données de localisation sont utilisées pour indiquer une localisation précise du dispositif de réseau d'accès, et les deuxièmes données de localisation sont des données de localisation obtenues par le dispositif de réseau d'accès sur la base d'un premier signal satellite ; ou
les données d'étalonnage comprennent des données différentielles des premières données de localisation et des deuxièmes données de localisation, et les données différentielles comprennent au moins l'une d'une valeur différentielle de longitude et de latitude, d'une valeur différentielle de distance, d'une valeur différentielle de phase de code, et d'une valeur différentielle de phase de porteuse.

4. Terminal (13 ; 200 ; 300 ; 1800 ; 1900 ; 2000), comprenant :
une première unité de réception (1801), configurée pour s'accorder, avec chacun d'au moins un dispositif de réseau d'accès (14 ; 1700 ; 1900 ; 2000), sur un format de communication respectif pour la transmission d'un paquet de données d'étalonnage provenant du dispositif de réseau d'accès respectif (14 ; 1700 ; 1900 ; 2000) au terminal (13 ; 200 ; 300 ; 1800 ; 1900 ; 2000) et pour recevoir (805 ; 1001) au moins un groupe de données **d'étalonnage** envoyées par les un ou plusieurs dispositifs de réseau d'accès (14 ; 1700 ; 1900 ; 2000) en utilisant le format de communication respectif ;
une seconde unité de réception (1802), configurée pour recevoir (806 ; 1002) un second signal satellite provenant d'un système satellite (12) ; et
une unité de détermination (1803), configurée pour déterminer (807 ; 1003) des troisièmes données de localisation du terminal sur la base du second signal satellite,
dans lequel l'unité de détermination (1803) est également configurée pour déterminer (808 ; 1004) une localisation précise du terminal sur la base des un ou plusieurs groupes de données d'étalonnage et des troisièmes données de localisation,
dans lequel la première unité de réception (1801) est spécifiquement configurée pour :
recevoir (805 ; 1001), dans un mode de transmission point à point, les un ou plusieurs groupes de données d'étalonnage envoyées par les un ou plusieurs dispositifs de réseau d'accès, dans lequel, dans le mode de transmission point à point, les un ou plusieurs groupes de données d'étalonnage sont envoyés par les un ou plusieurs dispositifs de réseau d'accès (14 ; 1700 ; 1900 ; 2000) au terminal (13 ; 200 ; 300 ; 1800 ; 1900 ; 2000) uniquement
dans lequel les un ou plusieurs groupes de données d'étalonnage comprennent une pluralité de groupes de données d'étalonnage, et l'unité de détermination (1803) est spécifiquement configurée pour :
déterminer un groupe de données d'étalonnage cibles sur la base de la pluralité de groupes de données d'étalonnage ; et
déterminer la localisation précise du terminal sur la base des données d'étalonnage cible et des troisièmes données de localisation ;
dans lequel les données d'étalonnage cibles sont un groupe de données d'étalonnage envoyées par un dispositif de réseau d'accès ayant une priorité la plus élevée, et dans lequel le dispositif de réseau d'accès ayant une priorité la plus élevée est un dispositif de réseau d'accès auquel une plus petite quantité de terminaux est connectée.
